# EUROPÄISCHE PATENTSCHRIFT

(11) **EP 1 899 584 B1**
(45) Veröffentlichungstag und Bekanntmachung des Hinweises auf die Patenterteilung: **14.12.2016**
(21) Anmeldenummer: 06762298.5
(22) Anmeldetag: 30.06.2006
(51) Int. Cl.: F01L 13/00, F01L 1/344, F02D 13/02, F02B 11/00

(54) **VARIABLER VENTILTRIEB EINER KOLBEN-BRENNKRAFTMASCHINE**
VARIABLE VALVE DRIVE FOR A RECIPROCATING INTERNAL COMBUSTION ENGINE
COMMANDE DE SOUPAPES VARIABLE D'UN MOTEUR A COMBUSTION INTERNE A PISTONS

(30) Priorität: 01.07.2005 DE 102005031241
(43) Veröffentlichungstag der Anmeldung: 19.03.2008
(73) Patentinhaber: FEV GmbH, 52078 Aachen (DE)
(72) Erfinder: KREBBER-HORTMANN, Karl, 52074 Aachen (DE)
(74) Vertreter: dompatent von Kreisler Selting Werner - Partnerschaft von Patent- und Rechtsanwälten mbB
(86) Internationale Anmeldenummer: PCT/EP2006/006357
(87) Internationale Veröffentlichungsnummer: WO 2007/003360

(56) Entgegenhaltungen:
- EP-A1- 0 863 301
- EP-A2- 1 052 391
- WO-A-2005/059340
- DE-A1- 19 526 888
- US-A1- 2002 040 703
- US-A1- 2002 195 078
- US-A1- 2003 226 528
- US-A1- 2004 182 359

## Beschreibung

Die vorliegende Erfindung betrifft eine Kolben-Brennkraftmaschine eines Kraftfahrzeuges mit einer Steuerung zur zyklus-synchronen Umschaltung von Fremdzündung in eine kontrollierte Selbstzündung und umgekehrt. Darüber hinaus wird ein Verfahren zum zyklussynchronen Umschalten von einem niedrigen auf einen hohen Restgasgehalt sowie ein Verfahren zum Betrieb einer Kolben-Brennkraftmaschine eines Kraftfahrzeuges mit einem zyklus-synchronen Umschalten von Fremdzündung in eine kontrollierte Selbstzündung und umgekehrt beansprucht.

Es ist bekannt, eine Kolben-Brennkraftmaschine eines Kraftfahrzeuges mit einem variablen Ventiltrieb auszustatten. Dieses dient insbesondere dazu, eine Ventilschaltung an den jeweiligen Betriebsbereich des Kraftfahrzeuges anpassen zu können.

Dokument EP 0 863 301 A1 offenbart einen variablen Ventiltrieb und Verfahren.

Aufgabe der vorliegenden Erfindung ist es, einen variablen Ventiltrieb zu verbessern, um unterschiedliche Betriebsbereiche eines Kraftfahrzeuges durch optimierten Betrieb der Kolben-Brennkraftmaschine zu unterstützen.

Diese Aufgabe wird mit einer Kolbenbrennkraftmaschine eines Kraftfahrzeuges mit den Merkmalen des Anspruches 1, mit einem Verfahren zum zyklus-synchronen Umschalten mit der Merkmalen des Anspruches 12 sowie mit einem Verfahren zum Betrieb einer Kolben-Brennkraftmaschine eines Kraftfahrzeuges mit den Merkmalen des Anspruches 13 gelöst. Weitere vorteilhafte Ausgestaltungen und Weiterbildungen sind in den jeweiligen abhängigen Ansprüchen angegeben.

Erfindungsgemäß wird vorgeschlagen, eine Kolbenbrennkraftmaschine eines Kraftfährzeuges mit einer Steuerung zur zyklus-synchronen Umschaltung von Fremdzündung in eine kontrollierte Selbstzündung und umgekehrt vorzusehen, wobei eine Ventilgruppe eines Zylinders mit mehren Ein- und Auslassventilen versehen ist und eine Öffnungsdauer der Ventilgruppe auf die Ein- und/oder Auslassventile verschieden aufgeteilt ist. Weiterhin wird ein Verfahren zum zyklus-synchronen Umschalten von einem niedrigen auf einen hohen Restgasgehalt bei gleichzeitiger Verstellung einer Öffnungszeit zumindest eines Einlassventils und einer Zylinderbefüllung vorgesehen, wobei eine Öffnungsdauer einer Ventilgruppe eines Zylinders mit mehreren Ein- und Auslassventilen auf die Ein- und/oder Auslassventile der Ventilgruppe verschieden aufgeteilt wird. Ein weiteres vorgeschlagenes Verfahren zum Betrieb einer Kolbenbrennkraftmaschine eines Kraftfahrzeuges sieht vor, dass ein zyklus-synchrones Umschalten von Fremdzündung in eine kontrollierte Selbstzündung und umgekehrt zumindest gesteuert wird, wobei eine Öffnungsdauer einer Ventilgruppe eines Zylinders mit mehren Ein- und Auslassventilen auf die Ein- und/oder Auslassventile der Ventilgruppe verschieden aufgeteilt wird.

Mit der vorgeschlagenen Kolben-Brennkraftmaschine wie auch mit den vorgeschlagenen Verfahren ist es insbesondere ermöglicht, ein Brennverfahren mit kontrollierter Selbstzündung bei hohen Abgasrückführungsraten vorsehen zu können. Vorzugsweise wird dabei eine nach dem Otto-Prinzip betriebene Kolbenbrennkraftmaschine ohne den Betrieb einer Zündeinrichtung, insbesondere einer Zündkerze, unter Ausnutzung von hohen Temperaturen wie auch eines entsprechenden Druckes zur Selbstzündung gebracht. Insbesondere kann hierfür vorgesehen sein, dass bei der Ventilgruppe des Zylinders ein Ventil in einer Teillast normal gesteuert wird entsprechend des Brennzyklusses, während ein anderes Ventil insbesondere zu einer inneren Abgasrückführung genutzt wird. Dieses Ventil weist daher vom anderen Ventil abweichende Steuerzeiten auf. Insbesondere ermöglichen die vorgeschlagene Kolbenbrennkraftmaschine wie auch die vorgeschlagenen Verfahren, einen zyklus-synchronen Wechsel zwischen einem Normalbetrieb einer nach dem Otto-Prinzip betriebenen Kolbenbrenhkraftmaschine eines Kraftfahrzeuges, bei dem die Zündeinrichtung unter Nutzung eines Zündfunkens eingesetzt wird, zu einem Selbstzündungsbetrieb und umgekehrt im Rahmen einer entsprechenden, vorzugsweise in einer Motorsteuerung hinterlegten Schaltstrategie. Vorzugsweise ist vorgesehen, dass eine kontrollierte Selbstzündung erst ab einer Kühlwassertemperatur von zumindest 40°C durchgeführt wird.

In diesem Zusammenhang wird beispielhaft auf mechanisch-variable Ventiltriebe verwiesen wie auch auf elektromagnetische bzw. elektromechanische Ventiltriebe, die ebenfalls einsetzbar sind. Diese können gemeinsam wie auch getrennt voneinander im Rahmen einer oder mehreren Ventilgruppen eines oder mehreren Zylindern einsetzbar sein. Darüber hinaus können auch variable Ventiltriebe mittels einer Nockenwellenphasenverstellung erzielt werden, insbesondere hierüber unterstützt werden. Beispielhaft wird im Rahmen der Offenbarung auf die DE 102 90 017, auf die DE 100 38 917, auf die DE 103 37 430, auf die DE 102 004 005 594, auf die DE 102 004 005 588, auf die DE 100 19 739, auf die DE 101 36 497, auf die DE 197 31 373, auf die DE 100 18 739 wie auch die DE 100 31 233 verwiesen, aus denen unterschiedliche Ventiltriebe und Anordnungen derselben sowie Steuer- und Regelungsvorrichtungen hervorgehen, die hier ebenfalls mit einsetzbar sind.

Beispielsweise sieht ein erstes Konzept einen mechanisch-variablen Ventiltrieb vor. An der Auslass- wie auch an der Einlassseite sind mehrere schaltbare Nockenprofile für jedes Ventil vorgesehen. Vorzugsweise wird dieses über eine Ausgestaltung einer Nockenwelle erfüllt, in der eine zweite Nockenwelle angeordnet ist. Die beiden Wellen können gegeneinander verdreht werden. Diese Relativverdrehung ist vorzugsweise derart, dass sie einen Bereich bis zu 100° einer Nockenphase der Nockenwelle umfasst. Vorzugsweise sind ein erster Phasensteller für eine Einlassnockenwelle und ein zweiter Phasensteller für eine Auslassnockenwelle vorgesehen. Ist eine einzige Nockenwelle für Einlass- wie auch für Auslassventile vorgesehen, kann ein einziger Phasensteller eingesetzt werden. Die Ventile sind vorzugsweise über Schalttassen bzw. Schalthebel betätigt. Des weiteren ist gemäß einer Weiterbildung vorgesehen, dass eine Ventilabschaltung für einzelne oder aber für alle Ventile vorgesehen ist. Mit diesem mechanisch-variablen Ventiltrieb kann eine unterschiedliche Restgas- bzw. Füllungssteuerung erzielt werden. Hierzu wird beispielsweise ein "Frühes-Einlass-Schließt" (FES), eine Auslasskanalrückführung (AKR) mit kontrollierter Selbstzündung (KSZ) und/oder eine Brennraumrückführung (BRR) mit kontrollierter Selbstzündung ausgeführt. Dieses ermöglicht insbesondere, dass ein mechanisch-variabler Ventiltrieb bei einer kontrollierten Selbstzündung eingesetzt wird, wobei eine Laststeuerung drosselfrei erfolgen kann.

Ein zweites Konzept eines mechanisch-variablen Ventiltriebes sieht vor, dass beispielsweise auf einer Auslassseite eine kontinuierliche Verlängerung eines Auslassevents durch einen entsprechend gesteuerten Teilhubnocken erfolgt. Gemäß einer anderen Ausgestaltung ist vorgesehen, dass ein zusätzlicher kurzer Auslassevent beispielsweise bei einem zweiten Auslassventil ermöglicht wird. Beispielsweise sind hierfür insbesondere drei Nockenprofile je Ventil vorgesehen. Einlassseitig wird vorzugsweise eine Steuerung vorgesehen, wie sie auch nach dem ersten Konzept vorgesehen ist. Mit dem zweiten Konzept lässt sich insbesondere eine mögliche Restgas- bzw. Füllungssteuerung ermöglichen, bei der beispielweise ein "Frühes-Einlass-Schließt" (FES), eine Auslasskanalrückführung (AKR) mit kontrollierter Selbstzündung (KSZ) wie auch eine Brennraumrückführung (BRR) bei verschiedenen Teilhubprofilen für ein erstes und ein zweites Auslassventil vorgesehen wird bzw. eine Brennraumrückführung bei einer Ventilgruppe, bei der mehr als zwei Nockenprofile je Ventil vorgesehen sind.

Insbesondere lässt sich mit der vorgeschlagenen Lösung eine Verbesserung eines Teillastwirkungsgrades bei gleichzeitig abgesenkten niedrigen Stickoxidemissionen bei kontrollierter Selbstzündung von konventionellen Otto-Kraftstoffen erzielen. Durch eine interne Abgasrückführung kann eine Selbstzündung an mehreren Orten des Brennraumes der Kolbenbrennkraftmaschine des Kraftfahrzeuges bewirkt werden. Mit einer Öffnungsdauer der Ventilgruppe, insbesondere einer Ventilüberschneidung, die auf die Ein- und/oder Auslassventile verschieden aufgeteilt ist, wird ermöglicht, eine Zylinderfüllung im Zusammenspiel mit einem Restgasanteil und darüber das Luftverhältnis so zu steuern, dass sich eine räumliche Verteilung des Kraftstoff-Luftgemisches im Brennraum ergibt, so dass eine nichtklopfende schnelle Umsetzung ermöglicht werden kann. Insbesondere ermöglicht dieses einen Brennverlauf bei einer Selbstzündung des eingesetzten Otto-Kraftstoffes, der einer idealen Gleichraumverbrennung nahe kommt.

Gemäß einer Weiterbildung ist vorgesehen, dass ein Umschalten von einem konventionellen Betrieb der Kolbenbrennkraftmaschine im Otto-Verfahren unter Nutzung einer Fremdzündung in eine homogene Selbstzündung nicht nur zyklus-synchron sondern auch zylinderselektiv erfolgt. Vorzugsweise ist daher vorgesehen, dass eine homogene Selbstzündung nur in einem Teillastbereich angewandt wird. In diesem Bereich kann ein hoher Restgasgehalt zur Verfügung gestellt werden, der eine homogene Selbstzündung ermöglicht. Bei höheren Lastanforderungen erfolgt ein Umschalten auf die Fremdzündung.

Eine weitere Ausgestaltung sieht vor, dass ein Umschalten von einem Fremdzündungsbetrieb in einen Selbstzündungsbetrieb der Kolbenbrennkraftmaschine erst dann erfolgt, wenn die Kolbenbrennkraftmaschine einen vordefinierten Temperaturbereich, insbesondere eine bestimmte Motortemperatur aufweist. Hierzu ist vorgesehen, dass an der Kolbenbrennkraftmaschine entweder direkt oder indirekt eine Temperaturmessung erfolgt. Dieses kann beispielsweise über einen Temperatursensor in der Nähe des Brennraumes wie auch über einen Temperatursensor im Abgasstrom erfolgen.

Vorzugsweise wird vorgesehen, dass zur Erzielung einer hohen Temperatur im Brennraum für die homogene Selbstzündung eine interne Abgasrückführung vorgesehen ist, bei der ein Restgas in einem Bereich von mindestens 20 % bis 80 % im Brennraum zurückgehalten wird. Dieses kann beispielsweise durch eine kurze Öffnungsdauer des oder der Auslassventile erzielt werden. Dieses wird insbesondere in einem Bereich niedriger Last ausgeführt. Dabei ist vorgesehen, dass nach einer Kompression des Restgases und erfolgtem Druckausgleich in der Expansion nur eine kurze Ventilöffnung des oder der Einlassventile erfolgt, bei der ein Frischgemisch bzw. Luft angesaugt wird. In einem hohen Lastbereich dagegen wird über eine Auslasskanalrückführung ein bereits ausgeschobenes Restgas aufgrund eines über einen oberen Totpunkt hinaus geöffneten Auslassventils wieder in den Brennraum zurückgesaugt. Gemäß einer Weiterbildung kann ebenfalls vorgesehen sein, dass ein oder mehrere Auslassventile im oberen Totpunkt geschlossen werden und dass Restgas durch ein erneutes Öffnen von zumindest einem Auslassventil in einer Abwärtsphase des Kolben angesaugt wird. Insbesondere kann auch eine Kombination dieser Varianten erfolgen.

Gemäß einer weiteren Ausgestaltung ist vorgesehen, dass bei einer Ventilüberschneidung eine Öffnungsdauer der Ventilgruppe auf die Ein- und/oder Auslassventile verschieden aufgeteilt vorliegt. Vorzugsweise ist vorgesehen, dass die Einlassventile der Ventilgruppe jeweils eine unterschiedliche Öffnungsdauer aufweisen. Diese kann über die verschiedenen Lastbereiche sich ändern. Auch besteht die Möglichkeit, dass die Auslassventile der Ventilgruppe jeweils eine unterschiedliche Öffnungsdauer aufweisen. Auch diese sind in unterschiedlichen Lastbereichen verschieden einstellbar. Gemäß einer Ausgestaltung ist dabei vorgesehen, dass ein Öffnungszeitpunkt eines ersten Einlassventils der Ventilgruppe von einem Öffnungszeitpunkt eines zweiten Einlassventiles zur Ventilgruppe abweicht und ein Öffnungszeitpunkt eines ersten Auslassventils der Ventilgruppe von einem Öffnungszeitpunkt eines zweiten Auslassventils zur Ventilgruppe abweicht. Auf diese Weise wird insbesondere ermöglicht, eine gewünschte Rückführung von ausgeschobenem Restgas wie auch eine Zuführung an Frischgas in die Brennkammer zu ermöglichen. Beispielsweise ist vorgesehen, dass das erste Auslassventil und/oder das erste Einlassventil der Ventilgruppe in eine interne Abgasrückführungsstrategie integriert schaltbar sind, während das zweite Auslassventil und/oder das zweite Einlassventil an einen normalen Verbrennungszyklus gemäß Otto-Prinzip gebunden sind. So kann in einem ersten Lastbereich das erste wie auch das zweite Einlass- bzw. Auslassventil synchron geschaltet werden. In bestimmten Lastbereichen jedoch, insbesondere bei einer zyklus-synchronen Umschaltung von Fremdzündung in eine kontrollierte Selbstzündung, divergieren die Schaltzyklen und damit die Öffnungsdauern der verschiedenen Auslass- bzw. Einlassventile. Dabei wird vorzugsweise sichergestellt, dass zumindest das zweite Auslassventil und/oder das zweite Einlassventil zu dem notwendigen Verbrennungszyklus entsprechend geöffnet bzw. geschlossen werden.

Zur Vermeidung von sich einstellenden Zwischenzuständen bei einer Umschaltung von Fremdzündung in eine kontrolliere Selbstzündung und umgekehrt, bei denen Verbrennungsaussetzer aufgrund der Nichtbeherrschbarkeit der Zwischenzustände möglich sind, ist eine zylindersynchrones Umschalten der Nocken von Bedeutung. Beispielsweise ist eine realisierbare Verstellgeschwindigkeit von Einlass- bzw. Auslassventilen ebenfalls von Bedeutung. Hierbei wird angestrebt, ein möglichst schnelles Öffnen und Schließen großer Querschnitte an den Ventilen zu erzielen. Dabei ist beispielsweise ein Auslassnocken so vorzusehen, dass ein voller Ventilfreigang gegeben ist, um einen maximalen Hub über einen maximalen Totpunkt des Kolbens hinaus zu ermöglich. Beispielsweise kann bei einem schnellen Öffnen bzw. Schließen die Aufteilung einer effektiven Öffnungsdauer einer Ventilgruppe auf mehrere Ein- oder Auslassventile erfolgen. So ist gemäß einer Ausgestaltung bei Verwendung einer Außennockenwelle mit einer Innenwelle vorgesehen, dass ein erstes Nockenprofil mit der Außenwelle verbunden ist. Mehrere weitere Nockenprofile sind hingegen mit der Innenwelle verbunden und können gegenüber der außenliegenden Welle verdreht werden. Unterstützt werden kann diese veränderte Öffnungsdauer weiterhin dadurch, dass für jedes Ventil eines Zylinders Schaltelemente vorhanden sind, die das Ventil vollständig abschalten als auch verschiedene Kinematiken wie zum Beispiel durch verschiedene Nockenprofile aktivieren können. Damit ist beispielsweise ein veränderter Restgasgehalt in der Brennkammer bzw. eine Beeinflussung der Zylinderfüllung in der Brennkammer möglich.

Bei einem Schlepphebel können beispielsweise zwei oder drei verschiedene Nockenprofile über einen Rollenschlepphebel auf ein Ventil wirken. Dieses ermöglicht eine kontinuierliche Verlängerung eines Grundevents einer Öffnung dieses Ventils. Dazu wird beispielsweise auf einer außenliegenden Nockenwelle ein konventionelles Grundprofil mit großem Hub vorgesehen. In einer innenliegenden Nockenwelle dagegen ist ein im Hub reduziertes Profil angeordnet, welches vollständig in einer Einhöhlung des Außenprofils liegen kann. Durch entsprechende Verdrehung kann nun eine Verlängerung des Vollhubevents mit dem verkleinerten Hub ermöglicht werden. Der verkleinerte Hub liegt beispielsweise in einem Bereich zwischen 40% und 50% des großen Nockenhubes. Insbesondere ist vorgesehen, dass bei dem großen Nockenhub und damit beim Vollhubnocken eines Rampe angeordnet ist, die auf den im Profil reduzierten Nocken überführt. Dadurch ergibt sich eine Reduzierung einer Geschwindigkeit eines Zwischenhebels im Ventiltrieb. Darüber hinaus ermöglicht dieses zusätzlich ein geräuscharmes Absetzen des Schlepphebels bei einem Nockenprofil auf das andere.

Eine Nockenwelle mit innenliegender und außenliegender Welle wird beispielsweise dadurch ermöglicht, dass die Nocken aus Stangenmaterial gefertigt werden. Die so gefertigten Nocken werden anschließend auf eine Nockenwelle aufgepresst und/oder formschlüssig verbunden. Gemäß einer Ausgestaltung ist hierbei vorgesehen, dass pro Ventil zwei feste Nockenprofile vorgesehen werden, wobei bei KSZ-Betrieb das erste Ventil angeschaltet wird.

Eine zyklus-synchrone Umschaltung wird beispielsweise derart ausgeführt, dass zumindest ein Zyklus während zumindest zweier Kurbelwellenumdrehungen bei kontrollierter Selbstzündung betrieben wird, während zumindest ein zweiter Zylinder im gleichen Zeitraum fremdgezündet wird. Gemäß einer anderen Ausgestaltung ist vorgesehen, dass ein erster und ein zweiter Zylinder gleichzeitig während weniger Kurbelwellenumdrehungen umgeschaltet werden. Vorzugsweise ist bei diesen Ausgestaltungen ebenfalls vorgesehen, dass beim Umschalten alle Ventile einer Ventilgruppe bis auf jeweils ein Auslassventil und zumindest ein Einlassventile ausgeschaltet werden.

Eine besonders kraftstoffsparende Betriebsweise hat sich eingestellt, wenn bei einer niedrigen Last insbesondere in einem BRR-Betrieb zwischen 0% bis 60%, vorzugsweise zwischen 20 % bis 40 % einer Nennlast ein Restgas in einer Höhe von mindestens 20% bis etwa 80%, insbesondere von mindestens 40% des bei einem Verbrennungsvorgang erzeugten Volumens durch eine verkürzte Öffnungsdauer zumindest eines Auslassventils in der Brennkammer zurückgehalten wird. Unter 0% ist dabei ein Leerlauf der Verbrennungskraftmaschine zu verstehen. Eine weitere Ausgestaltung sieht vor, dass insbesondere in einem AKR-Betrieb bei einer hohen Last in einem Bereich zwischen 20% bis 80% oder zwischen 75 % und 100 % einer Nennlast eine Öffnungsdauer eines Auslassventils derart angepasst wird, dass ein Zurücksaugen von aus der Brennkammer ausgeschobenem Restgas erfolgt. Vorzugsweise kann es hier zu einer Überschneidung eines Auslassevents mit einem Einlassevent kommen.

Die nachfolgende Tabelle zeigt eine Umschaltstrategie in beispielhafter Ausgestaltung für eine Kolbenbrennkraftmaschine, die nach dem Otto-Prinzip betrieben wird. In der ersten Tabelle ist für einen Vier-Ventil-Motor dargestellt, wie ausgehend von einer Fremdzündung (SI) die Auslässventile bzw. die Einlassventile dahingehend geschaltet werden, bis sich eine kontrollierte Selbstzündung (KSZ) eingestellt hat. Dieses wird in der Spalte mit der Überschrift "Modus" angegeben. In der Spalte "Zyklus" ist eine Verstellung in Bezug auf die Kurbelwellenumdrehung angegeben. In der Ausgangslage Zyklus = 0 sind alle Einlass- und Auslassventile aktiviert und haben ihren jeweiligen Vollhub. Zu diesem Zeitpunkt wird die Anforderung seitens einer Motorsteuerung aufgrund eines Erreichens eines speziellen Betriebsbereiches gestellt, dass eine kontrollierte Selbstzündung (KSZ) mit einer Auslasskanalrückführung (AKR) eingestellt werden soll. Aufgrund dessen kommt es beim Zyklus 1 zu einer Ventilabschaltung. Hierbei werden ein Auslassventil sowie ein Einlassventil deaktiviert. Im Zyklus 2 wird gemäß dieses Beispiels eine Nockenwellenverdrehung vorgenommen. Dieses ist als "Phasing Ein-/Auslass NW" bezeichnet. Dabei bleiben die aktivierten Ventile weiterhin in ihrer entsprechenden Stellung, während sich die den abgeschalteten Ventilen zugeordnete Nockenwelle in ihre für die Auslasskanalrückführung vorbestimmte Phasenlage verdreht. Diese Phase kann beispielsweise auch noch den dritten Zyklus durchlaufen, während im vierten Zyklus die eigentliche Umschaltung in die kontrollierte Selbstzündung erfolgt. Hierbei wird über die Auslasskanalrückführung insbesondere so viel Restgas wieder in die Brennkammer zurückgesaugt, dass im Brennraum selbst vorzugsweise eine Mehrfachzündung ermöglicht wird. Hierzu wird beispielsweise das deaktivierte Auslassventil mit vermindertem Hub betätigt, wobei das Auslassventil spät schließt, Das erste Einlassventil hingegen, welches vorher aktiviert mit Vollhub geschaltet hat, wird deaktiviert, während das zweite Einlassventil wiederum aktiviert, aber nur mit Teilhub geschaltet wird. Das zweite Einlassventil wird vorzugsweise dabei nach spät verstellt. Wie aus der ersten Tabelle zu entnehmen ist, erfolgt die eigentliche Umschaltung somit zu einem Zeitpunkt, bei dem eine Relativerdrehung von zwei ineinandergelagerten Nockenwellen abgeschlossen worden ist. Dieses ermöglicht die zyklussynchrone Umschaltung von Fremdzündung in kontrollierte Selbstzündung und umgekehrt. Letzteres geht aus der zweiten Tabelle hervor, die der ersten Tabelle nachgelagert ist. Beispielswiese kann eine Verstellgeschwindigkeit eines Phasenstellers mit etwa 100 bis 200°KW/s vorgenommen werden.

| Zyklus | | Auslassventile | | Einlassventile | | |
|---|---|---|---|---|---|---|
| | | 1 | 2 | 1 | 2 | Modus |
| 0 | Anforderung KSZ mit AKR | Vollhub | Vollhub | Vollhub | Vollhub | SI |
| 1 | Ventilabschaltung | Vollhub | deaktiviert | Vollhub | deaktiviert | SI |
| 2 | Phasing Ein-/Auslass NW | Vollhub | deaktiviert | Vollhub | deaktiviert | SI |
| 3 | Phasing Ein-/Auslass NW | Vollhub | deaktiviert | Vollhub | deaktiviert | SI |
| 4 | Umschaltung -> AKR | Vollhub | Teilhub,spät | deakt. | Teilhub,spät | KSZ |

| Zyklus | | Auslassventile | | Einlassventile | | |
|---|---|---|---|---|---|---|
| | | 1 | 2 | 1 | 1 | Modus |
| 0 | AKR | Vollhub | Teilhub,spät | deakt. | Teilhub,spät | KSZ |
| 1 | Ventilabschaltung und SI | Vollhub | deaktiviert | Vollhub | deaktiviert | SI |
| 2 | Phasing Ein.-/Auslass NW | Vollhub | deaktiviert | Vollhub | deaktiviert | SI |
| 3 | Phasing Ein.-/Auslass NW | Vollhub | deaktiviert | Vollhub | deaktiviert | SI |
| 4 | Ventilzuschaltung | Vollhub | Vollhub | Vollhub | Vollhub | SI |

Weitere vorteilhafte Ausgestaltungen und Weiterbildungen sind in den nachfolgenden Zeichnungen näher erläutert. Die dort dargestellten und beschriebenen Merkmale sind jedoch nicht auf die einzelnen Ausgestaltungen beschränkt. Vielmehr können diese mit anderen Merkmalen und Ausgestaltungen aus den Zeichnungen bzw. aus obiger Beschreibung zu Weiterbildung kombiniert werden. Es zeigen:
- Fig. 1: ein Prinzipschaltbild einer Brennkraftmaschine in schematischer Ansicht,
- Fig. 2: eine mehrteilige erste Nockenwelle,
- Fig. 3: einen Längsschnitt durch die Nockenwelle aus Fig. 2,
- Fig. 4: eine zweite Nockenwelle,
- Fig. 5: einen Längsschnitt durch die Nockenwelle aus Fig. 4,
- Fig. 6: eine schematische Ansicht eines Frühes-Einlass-Schließt (FES),
- Fig. 7: Steuerzeiten für ein zweites Auslassventil und ein erstes Einlassventil bei niedriger Last und Brennraumrückführung,
- Fig. 8: eine schematische Ansicht von Steuerzeiten für ein erstes und ein zweites Auslassventil sowie ein erstes Einlassventil in einem hohen Lastbereich mit Auslasskanalrückführung,
- Fig. 9: eine schematische Ansicht eines Zylinders mit Einlass- und Auslassventilen in einer Aufsicht,
- Fig. 10: eine Schaltstrategie für das erste Auslassventil und das erste Einlassventil für die Auslasskanalrückführung,
- Fig. 11: eine Schaltstrategie für das zweite Auslassventil zur Umsetzung der Auslasskanalrückführung,
- Fig. 12: einen schaltbaren Schlepphebel für zwei Nockenprofile in schematischer Ansicht für einen insbesondere kontinuierlich verstellbaren Auslass-Event,
- Fig. 13: eine schematische Ansicht von Steuerzeiten für einen Frühes-Einlass-Schließt (FES)-Betrieb,
- Fig. 14: eine schematische Ansicht von Ventilsteuerzeiten für einen Betrieb der Brennkraftmaschine mit kontrollierter Selbstzündung (KSZ) mit einer Auslasskanalrückführung (AKR),
- Fig. 15: eine schematische Ansicht einer ersten Prinzipskizze für ein 3-Ventil-System und
- Fig. 16: eine schematische Ansicht einer zweiten Prinzipskizze für ein 3-Ventil-System.

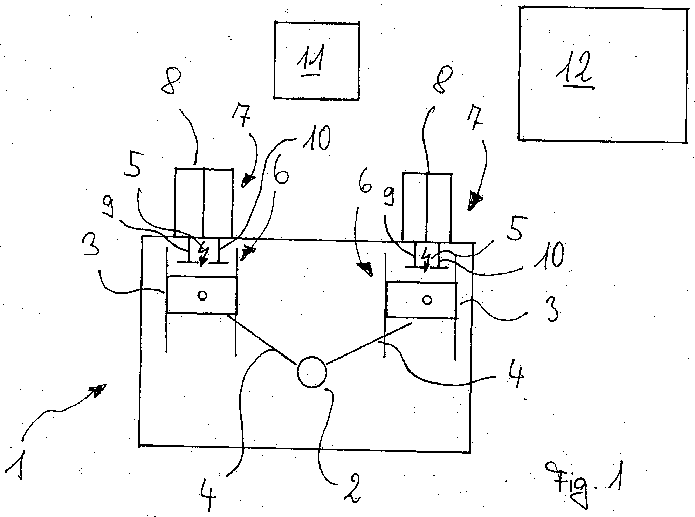

Fig. 1 zeigt in schematischer Ansicht eine Kolbenbrennkraftmaschine 1 eines Fahrzeuges, die beispielsweise nach dem Otto-Prinzip arbeitet. An eine Kurbelwelle 2 sind mehrere Kolben 3 über Pleuel 4 angeschlossen. Die Kolbenbrennkraftmaschine 1 kann dabei als Reihenmotor, als Boxermotor, als VR-Motor oder auch als V-Motor ausgeführt sein. Je Zylinder können verschiedene Ventilkonzepte verwirklicht sein, vorzugsweise vier und mehr Ventile je Zylinder. Jedoch lässt sich auch ein Drei-Ventil-Konzept je Zylinder verwirklichen. Bei einem Zwei-Ventil-Konzept ist die Verwirklichung des BRR-Prinzips noch ausführbar. Mittels einer Zündeinrichtung 5 kann in der nicht näher dargestellten Brennkammer, die durch die jeweiligen Kolben 3 und die dazu gegenüberliegenden Wände des Zylinders bzw. des Zylinderkopfes gebildet werden, eine Fremdzündung initiiert werden. Hierzu ist zu jedem Zylinder 6 ein Ventiltrieb 7 mit einer Ventilgruppe 8 zugeordnet. Der Ventiltrieb kann mechanischer, elektromagnetischer und/oder elektromechanischer Natur sein. Die Ventilgruppe 8 wiederum umfasst jeweils zumindest zwei Einlassventile 9 und zwei Auslassventile 10. Die Einlassventile 9 wie auch die Auslassventile 10 können über eine Steuerung 11 zumindest teilweise bezüglich ihrer Öffnungsdauer verstellt werden. Die Steuerung 11 ist vorzugsweise ein Steuergerät für den Ventiltrieb 7. Die Steuerung 11 steht darüber hinaus vorzugsweise mit einer Motorsteuerung 12 in Verbindung. Diese kann beispielsweise von der Kurbelwelle herrührende Signale aufnehmen, diese auswerten und darüber entsprechend Signale an die Steuerung 11 weitergeben. Auf diese Weise besteht eine Möglichkeit, einen Bewegungsablauf der Ventile 9, 10 im Zusammenspiel mit der Kurbelwelle 2 so zu synchronisieren, dass eine zyklus-synchrone Umschaltung zwischen einer Fremdzündung in eine kontrollierte Selbstzündung und umgekehrt ermöglicht wird. Vorzugsweise ist zumindest die Steuerung 11 mit der Motorsteuerung 12 über ein CAN-Bus-System gekoppelt. Insbesondere können auch andere Signale für die Steuerung 11 bzw. für die Motorsteuerung 12 über den CAN-Bus übertragen werden. Dieses ermöglicht eine große Datenbreite wie auch schnelle Übertragung, die insbesondere hinsichtlich der zyklus-synchronen Umschaltung vorteilhaft einsetzbar ist. Weiterhin sind jedoch auch andere Bus-Systeme einsetzbar, die vergleichbare Datenübertragungsmöglichkeiten vorsehen. Die Motorsteuerung 12 und/oder die Steuerung 11 können ein wie auch mehrere Kennfelder aufweisen. Aus diesen Kennfeldern können Sollwerte bestimmt werden, die bei der Steuerung bzw. Regelung einzelner Ventile 9, 10 genutzt werden können. Insbesondere besteht die Möglichkeit, über eine entsprechende Positionsaufnahme von ein oder mehreren Ventilen eine Regelung bzw. Steuerung der gewünschten Öffnungsdauer der Ventile 9, 10 zu ermöglichen. Hierzu kann beispielsweise die Steuerung 11 und/oder die Motorsteuerung 12 eine geeignete Timerschaltung zusätzlich vorsehen. Neben einer Trajektorensteuerung bzw. einer Regelung, die auf einer Trajektorensteuerung aufsetzt, besteht weiterhin die Möglichkeit, eine adaptive Regelung vorzusehen, um eine Öffnungsdauer der Ventilgruppe 7 auf die Ein- bzw. Auslassventile 9, 10 verschieden aufgeteilt vorzunehmen.

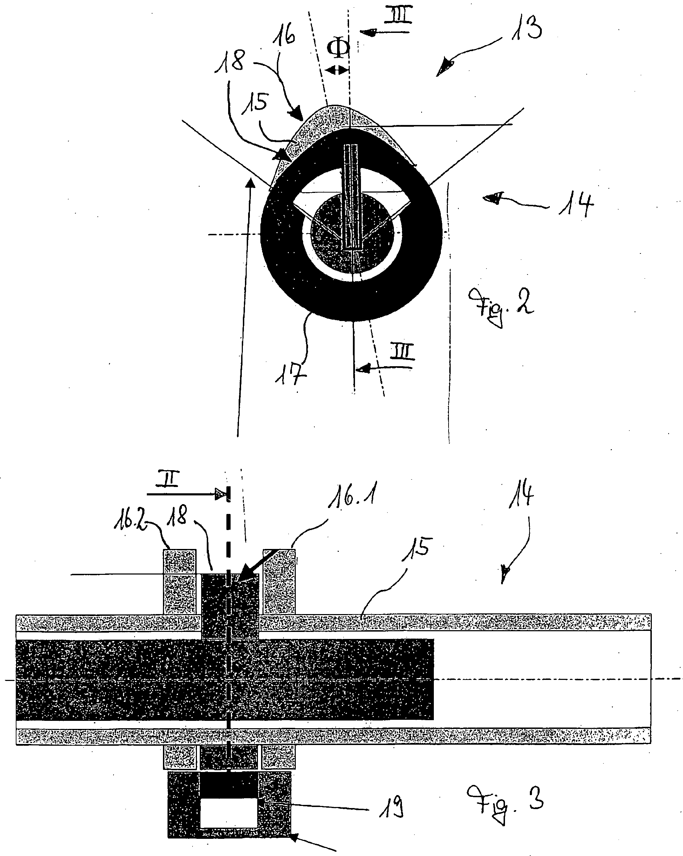

Fig. 2 zeigt ein erstes Beispiel für ein mechanisches Schaltelement 13. Das mechanische Schaltelement 13 ist Bestandteil eines mechanisch-variablen Ventiltriebes, welches über eine Schalttasse oder einen Schlepphebel betätigbar ist. Hierzu weist die dargestellte Nockenwelle 14 eine Außenwelle 15 mit einem Außennockenprofil 16 und eine Innenwelle 17 mit einem Innennockenprofil 18 auf. Die Innenwelle 17 ist im Inneren der Außenwelle 15 verdrehbar gelagert. Vorzugsweise weist ein Verstellbereich einen Bereich von zumindest 150° Kurbelwelle auf. Vorzugsweise beträgt der verstellbare Bereich zumindest 200° Kurbelwelle. Auf diese Weise besteht eine relative Phasenverschiebung Φ in einem Bereich zwischen 0 und 100° Nockenwelle.

Fig. 3 zeigt einen Längsschnitt durch das mechanische Schaltelement 13 aus Fig. 2. Die Außenwelle 15 ist gemäß diesem Beispiel Bestandteil einer mehrteilig gebauten Nockenwelle 14. Zwei Außennockenprofile 16.1, 16.2 betten dabei das Innennockenprofil 18 ein. Die Außennockenprofile 16.1, 16.2 bilden Vollhubnocken, während das Innennockenprofil 18 einen Teilhubnocken bildet. Über eine Schaltvorrichtung 19 kann auf ein Übertragungselement 20 eingewirkt werden. Je nach Stellung der Schaltvorrichtung 19 wirkt dabei das Außennockenprofil 16 oder aber das Innennockenprofil 18 auf das Übertragungselement 20 ein. Ist die Schaltvorrichtung 19 beispielsweise arretiert und weist die Nockenwelle 14 eine Phasenverschiebung auf, überträgt einerseits das Außennockenprofil 16 aber auch das Innennockenprofil 18 über das Übertragungselement 20 eine entsprechende Kinematik auf das nicht näher dargestellte Ventil. Entsprechend dieser Kinematik wird das Ventil geöffnet bzw. geschlossen. Das Übertragungselement 20 kann dabei beispielsweise ein Schlepphebel oder ein Tassenstössel sein.

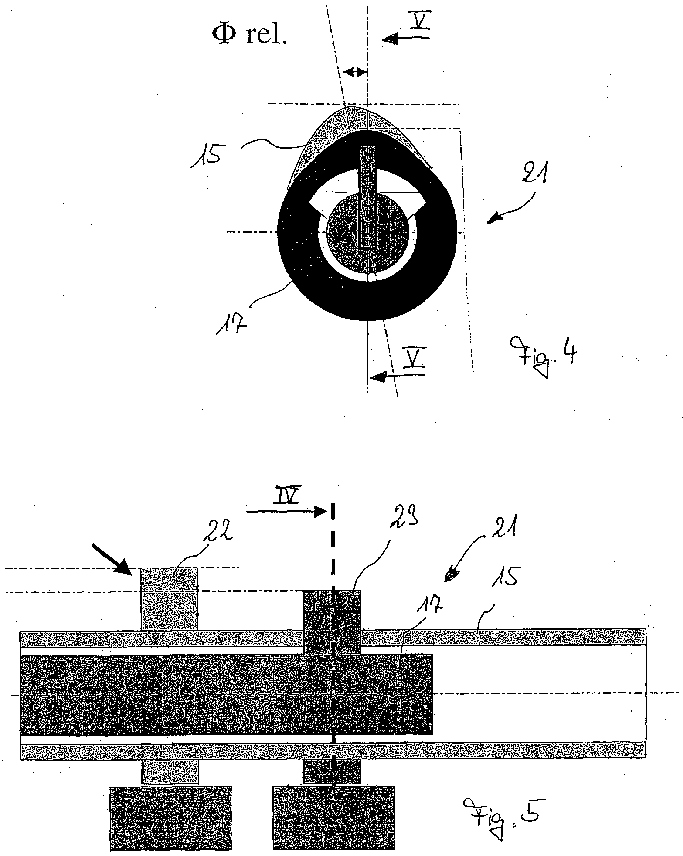

Fig. 4 zeigt eine zweite Nockenwelle 21, die ebenfalls Bestandteil eines mechanischen variablen Ventiltriebes ist. Auch diese weist eine relative Phasenverschiebung zwischen einer Außenwelle 15 und einer Innenwelle 17 auf. Vorzugsweise ist der Verstellbereich auch hier in einer Größenordnung, die 200° KW betragen kann, so dass sich eine relative Phasenverschiebung in einem Bereich zwischen 0 bis 100° einstellen lässt. Die zweite Nockenwelle 21 weist einen gegenüber der ersten Nockenwelle aus Fig. 2 anderen Aufbau auf, der aus der nachfolgenden Figur näher hervorgeht.

Fig. 5 zeigt einen Längsschnitt durch die zweite Nockenwelle 21 aus Fig. 4. Hierbei weist die zweite Nockenwelle 21 auf der Außenwelle 15 einen Vollhubnocken 22 für ein erstes Ventil und einen Teilhubnocken 23 für ein zweites Ventil auf. Die Innenwelle 17 ist dabei zu der Außenwelle 15 relativ verschiebbar bzw. verdrehbar angeordnet. Ein derartiges mechanisches Schaltelement ist beispielsweise als Phasensteller für Motoren mit einer Nockenwelle einsetzbar. Darüber hinaus kann hiermit unter Nutzung von Schlepphebeln oder Kipphebeln, die beide Ventile betätigen, von Vollhub auf Teilhub umgeschaltet werden. Diese Ausgestaltung eines mechanische Schaltelementes kommt somit ohne eine Schalttasse bzw. Schaltvorrichtung aus.

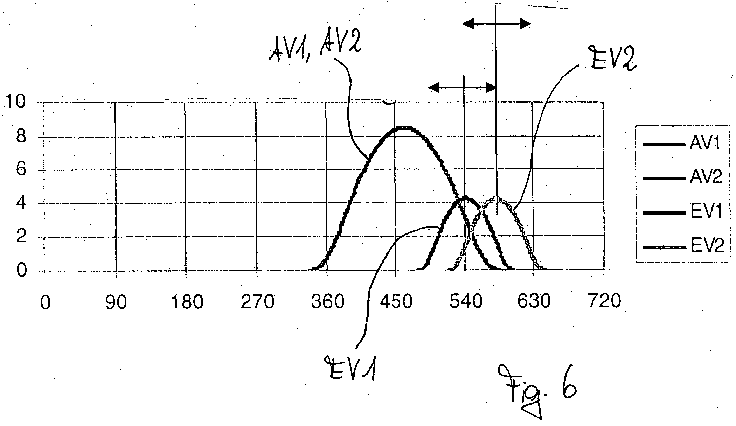

Fig. 6 zeigt beispielhaft eine Ventilsteuerung für insbesondere die oben angegebenen verschiedenartigen Ventiltriebe, um ein "Frühes-Einlass-Schtießt" (FES) zu ermöglichen. Auf der Y-Achse ist hierzu ein Ventilhub in Millimetern angegeben. Auf der X-Achse ist ein Kurbelwinkel in °-Kurbelwelle nach unterem Totpunkt angegeben. Zwei Einlassventile AV1, AV2 werden synchron geöffnet und schließen synchron in einem Bereich, der zumindest 360° bis 540° KW einschließt. Die beiden Auslassventile AV1, AV2 sind dabei im Vollhub geschaltet. Weiterhin ist ein erstes Einlassventil EV1 und ein zweites Einlassventil EV2 mit ihrer jeweiligen Bewegungskurve eingezeichnet. Beide Einlassventile EV1 und EV2 sind hier im Teilhub geschaltet. Teilhub bedeutet dabei vorzugsweise, dass der Ventilhub mindestens 30 % geringer ist als der Vollhub, insbesondere sich in einem Bereich zwischen 40 % bis 60 % des Vollhubes befindet. Während das erste Einlassventil EV1 vorzugsweise in einem Bereich zwischen 450° KW und 540° KW geöffnet wird, wird das zweite Einlassventil EV2 in einem Bereich zwischen 510° KW und 580° KW vorteilhafterweise geöffnet. Die jeweiligen Öffnungszeiten sind zueinander verschoben. Über eine Steuerung zum einen des Öffnungszeitpunktes bzw. Schließzeitpunktes des ersten Einlassventiles EV1 kann im Zusammenspiel mit einer angepassten Öffnung bzw. Schließung der Auslassventile AV1, AV2 eine Restgassteuerung vorgenommen werden. Insbesondere kann hierzu die Öffnungsdauer des ersten Einlassventiles EV1 verschoben werden, wie es durch den Pfeil angedeutet ist. Durch eine Verschiebung der Öffnungs- und Schließzeitpunkte des zweiten Einlassventiles EV2 wiederum besteht die Möglichkeit, eine Füllungssteuerung in der Brennkammer mit Frischluft bewirken zu können. Insgesamt ergibt sich auf diese Weise für eine Ventilgruppe eine Öffnungsdauer, die auf die in diesem Falle Einlassventile verschieden aufgeteilt ist.

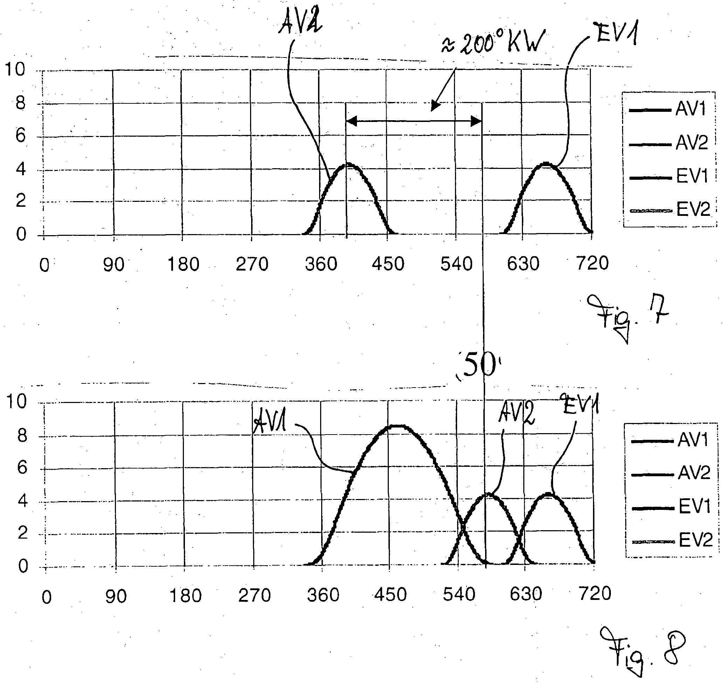

Fig. 7 und Fig. 8 geben beispielhaft für einen Otto-Motor mit zwei Einlassventilen und zwei Auslassventilen deren Steuerzeiten an, mit denen eine kontrollierte Selbstzündung durchführbar ist.

Fig. 7 zeigt in schematischer Ansicht Steuerzeiten, wobei auf der Y-Achse ein Ventilhub in Millimetern aufgetragen ist, während auf der X-Achse ein Kurbelwellenwinkel nach unterem Totpunkt aufgetragen ist. Über die Ansteuerung des zweiten Auslassventiles AV2 und des ersten Einlassventiles EV1 wird die Öffnungsdauer ausgeführt. Das erste Auslässventil AV1 sowie das zweite Einlassventil EV2 sind jeweils deaktiviert. Ein Öffnungsbereich des zweiten Auslassventils AV2 beinhaltet dabei einen Bereich zwischen 360° KW und 430° KW. Ein Öffnungsbereich des ersten Einlassventils EV1 hingegen umfasst zumindest einen Bereich von 630° KW bis 700° KW. Beide Öffnungsdauern können sich jedoch auch um diese Bereiche herum verschieben. Die Brennraumrückführung bedeutet, dass durch die kurze Öffnungsdauer des oder der Auslassventile ein hoher Anteil des Restgases im Zylinder zurückgehalten werden kann. Das Einlassventil hingegen ist ebenfalls nur kurz geöffnet, so dass auch nur ein geringeres Frischgemisch bzw. Luft gegenüber anderen Betriebsbedingungen der Otto-Kraftmaschine einströmen kann. Die Brennraumrückführung wird insbesondere bei niedriger Last ermöglicht.

Fig. 8 zeigt eine weitere Ausgestaltung von Steuerzeiten zur Erzielung einer kontrollierten Selbstzündung einer Otto-Brennkraftmaschine. Hierbei wird ein Prinzip der Auslasskanalrückführung verwendet. Auf der Y-Achse ist in Fig. 8 wiederum der Ventilhub in Millimetern angegeben, während auf der X-Achse wiederum der Kurbelwinkel in °-Kurbelwelle nach unterem Totpunkt angegeben ist. Im Gegensatz zu der Brennraumrückführung aus Fig. 7 ist der Lastbereich, bei dem die Auslasskanalrückführung gemäß Fig. 8 ausgeführt wird, höher. Hierzu wird beispielsweise die Öffnungsdauer des ersten Einlassventils EV1 unverändert belassen. Geändert hat sich jedoch hingegen der Öffnungszeitraum des zweiten Auslassventils AV2. Ermöglicht wird dieses beispielsweise durch einen Verstellbereich einer Nockenwelle, wie sie oben beschrieben wurde. Wie aus Fig. 8 zu entnehmen ist, erfolgt eine Verstellung um ca. 200° KW. Darüber hinaus ist zusätzlich neben dem zweiten Auslassventil AV2 nun auch das erste Auslassventil AV1 zugeschaltet. Letzteres weist einen Vollhub auf, während das zweite Auslassventil AV2 und das erste Einlassventil EV1 jeweils nur in einem Teilhub betrieben werden. Vorzugsweise beträgt der Teilhub zwischen 40 % bis 60 % eines Vollhubes. Eine Ventilüberschneidung zwischen Einlass- und Auslassventilen ergibt sich bei dieser Auslasskanalrückführung vorzugsweise nur zwischen dem zweiten Auslassventil AV2 und dem ersten Einlassventil EV1, nicht jedoch zwischen dem ersten Auslassventil AV1 und dem ersten Einlassventil EV1.

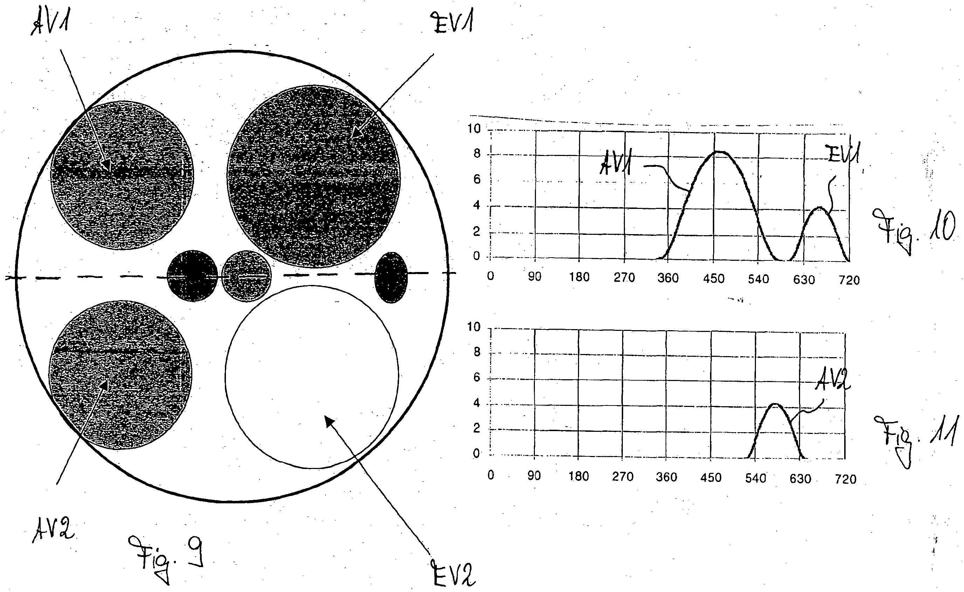

Fig. 9, Fig. 10 und Fig. 11 wiederum verdeutlichen noch einmal die Schaltstrategie für einen selektierten Zylinder, der einen Ventiltrieb mit vier Ventilen aufweist. Während Fig. 9 eine schematische Ansicht des Zylinders mit den einzelnen Ventilen und weiteren Bauteilen angibt, zeigt Fig. 10 die Öffnungsdauer von dem ersten Auslassventil AV1 und dem ersten Einlassventil EV1, die in Fig. 9 einander benachbart auf einer Hälfte zugeordnet sind. Fig. 11 wiederum zeigt die Öffnungsdauer des zweiten Auslassventils AV2, welches in der anderen Hälfte in Fig. 9 angeordnet ist. Beide Hälften in Fig. 9 sind durch die eingezeichnete gestrichelte Linie verdeutlicht. Das erste Auslassventil AV1 ist über den Ventiltrieb mit einem Vollhub beaufschlagbar. Insbesondere ist das erste Auslassventil AV 1 abschaltbar. Das erste Einlassventil EV1 hingegen ist über den Ventiltrieb mit einem Vollhub wie auch mit einem Teilhub schaltbar. Darüber hinaus ist es zusätzlich abschaltbar.

Das zweite Auslassventil AV2 wiederum ist über den Ventiltrieb mit einem Vollhub wie auch mit einem Teilhub beaufschlagbar. Das zweite Einlassventil EV2 ist ebenfalls einerseits abschaltbar, zum anderen über den Ventiltrieb mit einem Vollhub bzw. Teilhub beaufschlagbar. Erfüllt eine Ventilgruppe eines Zylinders diese Systemanforderung, besteht die Möglichkeit, eine Auslasskanalrückführung, wie sie aus Fig. 8 hervorgeht und in Fig. 10 und Fig. 11 nochmals aufgesplittet dargestellt worden ist bei entsprechender Ansteuerung, zu ermöglichen.

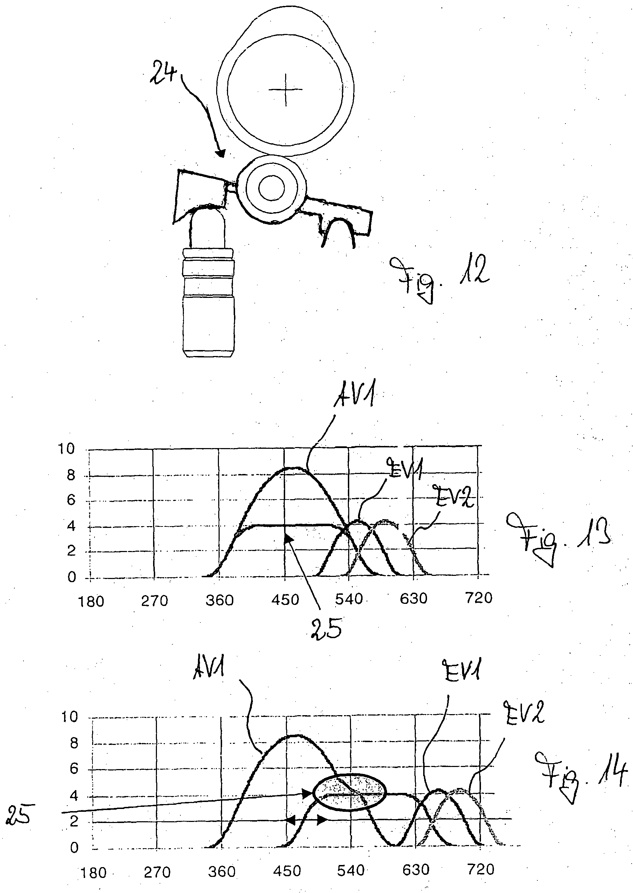

Fig. 12 zeigt in beispielhafter Ausgestaltung eine mechanische Verstellmöglichkeit, die über einen schaltbaren Schlepphebel 24 für zwei Nockenprofile ermöglicht wird. Je nach einstellbarer Stellung des Schlepphebels 24 kann ein Vollhub wie auch ein Teilhub eingestellt werden. Hierzu weist die Nockenwelle zwei unterschiedliche Nockenwellenaußenkonturen auf, wobei die Verstellmöglichkeit sich beispielsweise durch eine unterschiedliche Ablaufkontur des schaltbaren Schlepphebels 24 ergibt. Insbesondere ist der Schlepphebel 24 so schaltbar, dass sich ein kontinuierlich verstellbarer Öffnungsbereich für das jeweils betätigte Ventil ergibt.

Fig. 13 zeigt in beispielhafter Ausgestaltung die Steuerzeiten für einen "Frühes-Einlass-Schließt"-Betrieb mit einem mechanischen Schaltelement, wie es beispielsweise aus Fig. 12 hervorgeht. Hierbei werden das erste und das zweite Einlassventil EV1, EV2 zu unterschiedlichen Zeiten jeweils geöffnet bzw. geschlossen, so dass sich eine Öffnungsdauer der Ventilgruppe ergibt, die auf die einzelnen Einlassventile aufgeteilt ist. Darüber hinaus wird das erste Auslassventil AV1 mit einem Vollhub beaufschlagt. Dazu wird vorzugsweise die Nockenkontur auf einer Außenwelle der Nockenwelle genutzt. Mit eingezeichnet ist der Verfahrweg 25, der über einen Teilhubnocken am ersten Auslassventil AV1 initiiert werden würde, sofern dieser aktiviert wäre. Da aber der Teilhubnocken sich in einer Stellung befindet, bei der das erste Auslassventil AV1 über den Vollhubnocken gesteuert wird, ergibt sich keine geänderte Öffnung bzw. Schließung des ersten Auslassventils AV1. Eine derartige Änderung ist jedoch durch beispielsweise Phasenverschiebung von Innenwelle und Außenwelle der Nockenwelle möglich. Darüber hinaus kann durch eine Schaltung beispielsweise des schaltbaren Schlepphebels in Fig. 12 eine kontinuierliche Änderung der Öffnungsdauer und des Öffnungshubes des ersten Auslassventils AV1 eingestellt werden.

Fig. 14 gibt in schematischer Ansicht die Steuerzeiten für einen kontinuierlichen Selbstzündungsbetrieb mit einer Auslasskanalrückführung an, wie sie mit einer Vorrichtung gemäß Fig. 12 beispielsweise erzielt werden kann. Gegenüber Fig. 13 sind die Öffnungszeiten des ersten und des zweiten Einlassventils EV1, EV2 jeweils um mindestens 100° KW verschoben. Insbesondere können die Öffnungszeiten beider Einlassventile sich auch gegenseitig zueinander verschieben. Darüber hinaus ist das Auslassventil AV1 einerseits mit dem Vollhubnocken und andererseits mit dem Teilhubnocken aktiviert. Ein möglicher Verstellbereich des Teilhubnockens ist durch den doppelseitigen Pfeil angedeutet. Zwischen dem Vollhubnocken und dem Teilhubnocken ergibt sich eine Rampe 25, die eingekreist ist. Mittels der Rampe 25 wird von dem Vollhubnocken ein Nockenfolger auf den Teilhubnocken überführt, ohne dass es zu einem Abheben des Nockenfolgers von der Nockenwelle kommt. Die Rampe 25 ist insbesondere derart ausgestaltet, dass über den gesamten Verstellbereich des Teilhubnockens bezüglich des Vollhubnockens ein Anliegen eines Nockenfolgers gewährleistet bleibt. Während im Vergleich zu Fig. 13 somit der Vollhubnocken nahezu unverändert bezüglich des Öffnungszeiträumes gestaltet wird, ermöglicht der Betrieb des Teilhubnockens eine Rückführung von aus dem Zylinder in einen Auslasskanal eingeströmtes Restgas zurück in die Brennkammer. Durch eine Überschneidung des Öffnungszeitraumes des ersten Auslassventiles AV1 mit den Öffnungszeiten von dem ersten und dem zweiten Einlassventil EV1, EV2 ergibt sich die für einen hohen Lastbereich notwendige Konstellation einerseits einer hohen Temperatur im Brennraum selbst aufgrund des rückgeführten Restgases wie auch ein dafür ausreichender zugeführter Luftstrom, die beide aufgrund der Ventilüberschneidung miteinander vermischt werden können.

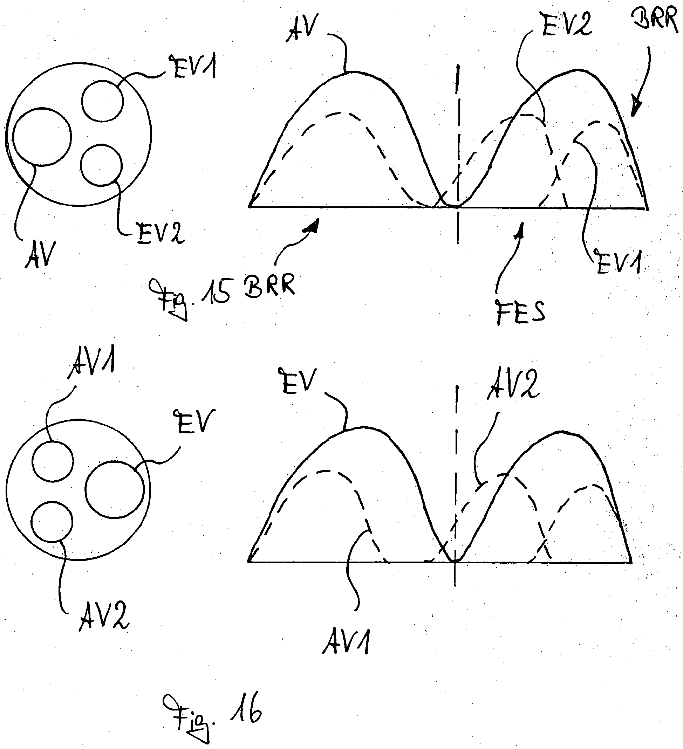

Fig. 15 zeigt in schematischer Ansicht eine Prinzipskizze für ein 3-Ventil-System an einem Zylinder mit einem Auslassventil AV, einem ersten Einlassventil EV1 und einem zweiten Einlassventil EV2. Die Anordnung der Ventile zueinander geht aus dem linken Bereich der Figur hervor, während ein Betätigungsablauf der einzelnen Ventile aus dem rechten Bereich der Figur hervorgeht. Die Einlassventile sind vorzugsweise in Teilhub arbeitend, wobei die Betätigung des ersten Einlassventils zu einem anderen Zeitpunkt erfolgt als diejenige des zweiten Einlassventils. Beide können sich jedoch in ihrer Öffnungsphase überschneiden. Über das Zusammenspiel des zweiten Einlassventils mit dem Auslassventil wird eine Brennraumrückführung (BRR) wie auch ein Frühes-Einlass-Schließt (FES) bewerkstelligt. Bei der BRR ist vorzugsweise das Auslassventil geöffnet, wobei während der Öffnungsphase des Auslassventils das zweite Einlassventil ebenfalls öffnet. Eine Umkehrung der Öffnungsbewegung des zweiten Einlassventils in eine Schließbewegung erfolgt vorzugsweise während das Auslassventil sich noch weiter in seiner Öffnungsbewegung befindet. Beim FES befindet sich das zweite Einlassventil in seiner Schließbewegung, während das erste Einlassventil noch in seiner Öffnungsbewegung ist. Vorzugsweise ist die Öffnungsbewegung noch nicht se ist die Öffnungsbewegung noch nicht abgeschlossen, wenn die Schließbewegung des zweiten Einlassventils endet.

Fig. 16 zeigt in schematischer Ansicht eine weitere Prinzipskizze für ein 3-Ventil-System an einem Zylinder mit einem Einlassventil EV, einem ersten Auslassventil AV1 und einem zweiten Auslassventil AV2. Hierbei werden die Auslassventile vorzugsweise im Teilhub betätigt. Während hierbei das erste Auslassventil für ein BRR eingesetzt wird, wird das zweite Auslassventil so geschaltet, dass es öffnet, wenn das Einlassventil noch nicht geschlossen ist und das erste Auslassventil schon längst während der Schließbewegung des Einlassventiles geschlossen wurde. Das zweite Auslassventil schließt vorzugsweise, wenn das erste Auslassventil wieder geöffnet wird, was vorzugsweise während einer Öffnungsphase des Einlassventils erfolgt.

## Patentansprüche

1. Verfahren zum zyklussynchronen Umschalten von einem niedrigen auf einen hohen Restgasgehalt bei einem Wechsel zwischen einem Normalbetrieb einer nach dem Otto-Prinzip betriebenen Kolbenbrennkraftmaschine eines Kraftfahrzeugs, bei dem eine Zündeinrichtung unter Nutzung eines Zündfunkens eingesetzt wird, und einem Selbstzündungsbetrieb bei gleichzeitiger Verstellung einer Öffnungszeit zumindest eines Einlassventils und einer Zylinderbefüllung, wobei eine Öffnungsdauer einer Ventilgruppe (8) eines Zylinders (6) mit mehreren Ein- und Auslassventilen auf die Ein- und/oder Auslassventile der Ventilgruppe (8) verschieden aufgeteilt wird, wobei bei einer niedrigen Last zwischen 0% bis 60% einer Nennlast, insbesondere einer Last zwischen 20% bis 40%, ein Restgas in einer Höhe von zumindest 20% bis etwa 80% des bei einem Verbrennungsvorgang erzeugten Volumens durch eine verkürzte Öffnungsdauer zumindest eines Auslassventils in der Brennkammer zurückgehalten wird, wobei eine kontrollierte Selbstzündung erst ab einer Kühlwassertemperatur von zumindest 40°C durchgeführt wird,
**dadurch gekennzeichnet, dass** das Umschalten zylinderselektiv erfolgt.

2. Verfahren zum Betrieb einer Kolben-Brennkraftmaschine (1) eines Kraftfahrzeuges, wobei ein zyklussynchrones Umschalten von Fremdzündung zylinderselektiv in eine kontrollierte Selbstzündung und umgekehrt gesteuert wird, wobei eine Öffnungsdauer einer Ventilgruppe (8) eines Zylinders (6) mit mehreren Ein- und Auslassventilen auf die Ein- und/oder Auslassventile der Ventilgruppe (8) verschieden aufgeteilt wird, **dadurch gekennzeichnet, dass** eine kontrollierte Selbstzündung erst ab einer Kühlwassertemperatur von zumindest 40°C durchgeführt wird.

3. Verfahren nach Anspruch 1 oder 2, **dadurch gekennzeichnet, dass** zumindest ein erster Zylinder während zumindest mehrerer Kurbelwellenumdrehungen bei kontrollierter Selbstzündung betrieben wird, während zumindest ein zweiter Zylinder im gleichen Zeitraum fremdgezündet wird.

4. Verfahren nach Anspruch 1 oder 2, **dadurch gekennzeichnet, dass** ein erster und ein zweiter Zylinder gleichzeitig während weniger Kurbelwellenumdrehungen umgeschaltet werden.

5. Verfahren nach Anspruch 3 oder 4, **dadurch gekennzeichnet, dass** beim Umschalten alle Ventile einer Ventilgruppe (8) bis auf ein Auslassventil und zumindest ein Einlassventil ausgeschaltet werden.

6. Verfahren nach einem der vorhergehenden Ansprüche, **dadurch gekennzeichnet, dass** bei einer hohen Last in einem Bereich zwischen 0% und 80% oder 75% und 100% einer Nennlast eine Öffnungsdauer eines Auslassventils derart angepasst wird, dass ein Zurücksaugen von aus der Brennkammer ausgeschobenem Restgas erfolgt.

7. Verfahren nach Anspruch 6, **dadurch gekennzeichnet, dass** ein Auslassventil während einer Abwärtsbewegung eines Kolbens nach Abschluss eines ersten Ladungswechsels erneut öffnet.

8. Verfahren nach einem der vorhergehenden Ansprüche, **dadurch gekennzeichnet, dass** zumindest an einem Ventil eines Zylinders eine zyklussynohrone Umstellung mittels eines mechanisch variablen Ventiltriebes erfolgt.

9. Verfahren nach Anspruch 8, **dadurch gekennzeichnet, dass** ein Frühes-Einlass-Schließt und/oder ein Spätes-Einlass-Schließt mittels des mechanisch variablen Ventiltriebs eingestellt wird.

10. Verwendung eines Verfahrens nach einem der Ansprüche 1 bis 9 mit einer Kolbenbrennkraftmaschine (1) eines Kraftfahrzeugs.

## Claims

1. A method for cycle-synchronous switching from a low to a high residual gas content when a change is made between normal operation of a piston internal combustion engine of an automobile that is operated according to the Otto principle, the normal operation being performed by use of an ignition unit actuated by an ignition spark, and self-ignition operation, with simultaneous adjustment of an opening period of at least one inlet valve and of a cylinder charge, wherein an opening period of a valve group (8) of a cylinder (6) having a plurality of inlet and outlet valves is to be distributed in a different manner among the inlet and/or outlet valves of the valve group (8), wherein, in case of a low load between 0% and 60% of a nominal load, particularly a load between 20% and 40%, a residual gas at a level between at least 20% and about 80% of the volume generated in a combustion process is retained in a combustion chamber by a shortened opening period of at least one opening valve, wherein a well-aimed self-ignition is performed only from a cooling water temperature of at least 40°C, **characterized in that** the switching is performed in a cylinder-selective manner.

2. A method for operating a piston internal combustion engine (1) of an automobile, wherein a cycle-synchronous switching is controlled in a cylinder-selective manner from externally-supplied ignition into well-aimed self-ignition and vice versa, wherein an opening period of a valve group (8) of a cylinder (6) having a plurality of inlet and outlet valves is to be distributed in a different manner among the inlet and/or outlet valves of the valve group (8), **characterized in that** a well-aimed self-ignition is performed only from a cooling water temperature of at least 40°C.

3. The method according to claim 1 or 2, **characterized in that**, during at least a plurality of crankshaft rotations, at least a first cylinder is operated with well-aimed self-ignition while, in the same period, at least one second cylinder is operated by externally-supplied ignition.

4. The method according to claim 1 or 2, **characterized in that**, during a few crankshaft rotations, a first and a second cylinder are switched at the same time.

5. The method according to claim 3 or 4, **characterized in that**, upon switching, all valves of a valve group (8) except for one outlet valve and at least one inlet valve are switched off.

6. The method according to any one of the preceding claims, **characterized in that**, in case of a high load in a range between 0% and 80% or 75% and 100% of a nominal load, an opening period of an outlet valve is adapted in a manner causing back suction of residual gas which has been urged out of the combustion chamber.

7. The method according to claim 6, **characterized in that** an outlet valve is caused to open again during a downward movement of a piston after completion of a first charge exchange.

8. The method according to any one of the preceding claims, **characterized in that**, at least on one valve of a cylinder, a cycle-synchronous switching is performed by means of a mechanically variable valve drive.

9. The method according to claim 8, **characterized in that** an early inlet valve closing and/or a late inlet valve closing are set by the mechanically variable valve drive.

10. Use of a method according to any one of claims 1 to 9 in a piston internal combustion engine (1) of an automobile.

## Revendications

1. Procédé pour la commutation, synchronisée avec le cycle, d'une teneur en gaz résiduels basse à une teneur en gaz résiduels haute lors d'un changement du fonctionnement normal d'un moteur à combustion interne à pistons d'un véhicule à moteur fonctionnant selon le principe d'Otto, dans lequel est mis en oeuvre un dispositif d'allumage utilisant une étincelle d'allumage, à un fonctionnement à auto-allumage avec réglage simultané d'un temps d'ouverture d'au moins une soupape d'admission et d'un remplissage de cylindre, une durée d'ouverture d'un groupe de soupapes (8) d'un cylindre (6) à plusieurs soupapes d'admission et d'échappement étant répartie différemment entre les soupapes d'admission et/ou d'échappement du groupe de soupapes (8), auquel cas, en présence d'une faible charge entre 0 % et 60 % d'une charge nominale, en particulier d'une charge entre 20 % et 40 %, un gaz résiduel à hauteur d'au moins 20 % à environ 80 % du volume produit lors d'un processus de combustion est retenu par une durée d'ouverture réduite d'au moins une soupape d'échappement dans la chambre de combustion, un auto-allumage contrôlé n'étant opéré qu'à partir d'une température d'eau de refroidissement d'au moins 40 °C,
**caractérisé en ce que** la commutation s'opère sélectivement par cylindre.

2. Procédé pour faire fonctionner un moteur à combustion interne à pistons (1) d'un véhicule à moteur, dans lequel est commandée, sélectivement par cylindre, une commutation, synchronisée avec le cycle, d'un allumage commandé à un auto-allumage contrôlé et inversement, une durée d'ouverture d'un groupe de soupapes (8) d'un cylindre (6) à plusieurs soupapes d'admission et d'échappement étant répartie différemment entre les soupapes d'admission et/ou d'échappement du groupe de soupapes (8), **caractérisé en ce qu'**un auto-allumage contrôlé n'est opéré qu'à partir d'une température d'eau de refroidissement d'au moins 40 °C.

3. Procédé selon la revendication 1 ou 2, **caractérisé en ce qu'**au moins un premier cylindre est en fonctionnement pendant au moins plusieurs rotations de vilebrequin en cas d'auto-allumage contrôlé, tandis qu'au moins un second cylindre est allumé par allumage commandé dans le même laps de temps.

4. Procédé selon la revendication 1 ou 2, **caractérisé en ce qu'**un premier et un second cylindre sont commutés simultanément pendant un nombre réduit de rotations de vilebrequin.

5. Procédé selon la revendication 3 ou 4, **caractérisé en ce que**, lors de la commutation, toutes les soupapes d'un groupe de soupapes (8) sont mises hors circuit à l'exception d'une soupape d'échappement et d'au moins une soupape d'admission.

6. Procédé selon l'une des revendications précédentes, **caractérisé en ce qu'**en présence d'une charge élevée dans une plage comprise entre 0 % et 80 % ou entre 75 % et 100 % d'une charge nominale, une durée d'ouverture d'une soupape d'échappement est adaptée de telle façon que s'opère un refoulement de gaz résiduels extraits de la chambre de combustion.

7. Procédé selon la revendication 6, **caractérisé en ce qu'**une soupape d'échappement s'ouvre de nouveau pendant un mouvement de descente d'un piston à l'issue d'un premier changement de charge.

8. Procédé selon l'une des revendications précédentes, **caractérisé en ce que** s'effectue, au moins sur une soupape d'un cylindre, une commutation synchronisée avec le cycle à l'aide d'un entraînement de soupape variable mécaniquement.

9. Procédé selon la revendication 8, **caractérisé en ce qu'**une fermeture d'admission précoce et/ou une fermeture d'admission tardive est réglée à l'aide de l'entraînement de soupape variable mécaniquement.

10. Utilisation d'un procédé selon l'une des revendications 1 à 9 avec un moteur à combustion interne à pistons (1) d'un véhicule à moteur.
